# EUROPÄISCHE PATENTSCHRIFT

(11) **EP 2 644 354 B1**
(45) Veröffentlichungstag und Bekanntmachung des Hinweises auf die Patenterteilung: **09.03.2016**
(21) Anmeldenummer: 13001507.6
(22) Anmeldetag: 25.03.2013
(51) Int. Cl.: B29C 45/76, B29C 45/17

(54) **Bedieneinheit für eine Spritzgießmaschine**
Operating unit for an injection moulding machine
Unité de commande pour une machine de moulage par injection

(30) Priorität: 29.03.2012 AT 3792012
(43) Veröffentlichungstag der Anmeldung: 02.10.2013
(73) Patentinhaber: ENGEL AUSTRIA GmbH, 4311 Schwertberg (AT)
(72) Erfinder: Mairhofer, Friedrich, 4331 Naarn im Machland (AT); Voggeneder, Johann, 4310 Mauthausen (AT); Grillenberger, Friedrich, 4351 Saxen (AT); Seitelberger, Christian, 4320 Perg (AT); Dimmler, Gerhard, 4641 Steinhaus (AT)
(74) Vertreter: Gangl, Markus

(56) Entgegenhaltungen:
- EP-B1- 1 138 448
- WO-A1-2008/064380
- DE-U1- 20 214 899
- JP-A- S60 218 114

## Beschreibung

Die Erfindung betrifft eine Bedieneinheit für eine Spritzgießmaschine, mit einem Bedienelement zum Auslösen zumindest einer Bewegung einer Antriebseinheit der Spritzgießmaschine, wobei das Bedienelement von einer Grundstellung in einen die Bewegung der Antriebseinheit auslösenden Auslösebereich bewegbar ist. Zudem betrifft die Erfindung eine Spritzgießmaschine mit zumindest einer Antriebseinheit zum Bewegen eines Teils der Spritzgießmaschine und einer solchen Bedieneinheit.

Bei der Bedienung von Spritzgießmaschinen gibt es bereits zahlreiche unterschiedliche Varianten, um den Bedienkomfort zu erhöhen. In den letzten Jahren haben sich dabei immer öfters Bedieneinheiten durchgesetzt, die eine geringere Anzahl an Bedienelementen aufweisen. Dies ist nicht zuletzt darauf zurückzuführen, dass immer öfter statt rein mechanischer Schalter Bedieneinheiten mit berührungsempfindlichen Bildschirmen eingesetzt werden. Auch können aufgrund vielfältigster Darstellungsmöglichkeiten ein und demselben Schalter mehrere Funktionen zugewiesen werden. Ein Beispiel für eine derartige Bedieneinheit geht aus der AT 009 943 U1 hervor. Dabei ist das mit dem Bezugszeichen 7 versehene Bedienelement in zwei Richtungen in Auslösebereiche bewegbar, wodurch eine entsprechende Bewegung eines Teils der Spritzgießmaschine ausgelöst wird. Sobald der Bediener an diesem Bedienelement gedreht hat, wird sofort die Bewegung entsprechend einem hinterlegten Geschwindigkeitsprofil ausgeführt. Nachteilig dabei ist, dass der Bediener nur umständlich Einfluss auf die tatsächliche Geschwindigkeit der ausgelösten Bewegung einer Antriebseinheit hat. So könnte der Bediener bspw. vor dem Durchführen der Bewegung auf dem Bildschirm eine andere Geschwindigkeit bzw. ein anderes Geschwindigkeitsprofil einstellen. Er muss somit eine in einem separaten vorhergehenden Schritt zu erledigende Umprogrammierung durchführen bzw. Änderungen der Geschwindigkeit vor Betätigung festlegen.

Diesbezüglich sieht die Erfindung vor, dass der Auslösebereich eine Vielzahl von Zwischenstellungen zwischen der Grundstellung und einer Maximalstellung aufweist, wobei die Geschwindigkeit der ausgelösten Bewegung der Antriebseinheit abhängig von der Entfernung der gewählten Zwischenstellung des Bedienelements von der Grundstellung ist. Eine entsprechende Geschwindigkeitsansteuerung eines Roboterarms über einen Tipp-Drehschalter geht aus der EP 1 138 448 B1 hervor. Mit diesem Drehschalter kann aber nur der Roboterarm bewegt werden oder eine Menübedienung erfolgen.

Die Aufgabe der vorliegenden Erfindung besteht daher darin, eine gegenüber dem Stand der Technik verbesserte Bedieneinheit zu schaffen. Insbesondere soll der Bedienkomfort erhöht werden und eine einfachere und schnellere Einflussnahme vom Bediener auf einen Funktionswechsel und auf die Geschwindigkeit der durch die Bedienbewegung des Bedienelements ausgelösten Bewegung einer Antriebseinheit möglich sein.

Dies wird für eine Bedieneinheit mit den Merkmalen des Anspruchs 1 gelöst. Bevorzugte Ausführungsbeispiele sind in den Unteransprüchen angegeben.

Erfindungsgemäß ist demnach vorgesehen, dass durch das Bedienelement Bewegungen mehrerer Antriebseinheiten auslösbar sind, wobei durch Drücken, Ziehen, Schwenken usw. des Bedienelements ein Wechsel der durch das Bedienelement angesteuerten Antriebseinheit erfolgt. Dadurch bildet das Bedienelement eine handliche und übersichtliche Einknopfbedienung für eine Bedieneinheit einer Spritzgießmaschine. Somit sind mit dem Bedienelement zwei unterschiedliche Arten von Bedienbewegungen möglich. Zum Einen muss eine Bewegungsmöglichkeit eindeutig der Geschwindigkeitsregelung zugeordnet sein. Die andere Bewegungsmöglichkeit muss eindeutig einen Rückschluss auf einen Funktionswechsel zulassen.

Der Bediener kann durch die von ihm betätigte Zwischenstellung bzw. Maximalstellung des Bedienelements die Geschwindigkeit ohne vorherige Änderung eines Geschwindigkeitsprofils beeinflussen. Entsprechend ist bevorzugt vorgesehen: Je größer die Entfernung der Zwischenstellung von der Grundstellung ist, desto höher ist die Geschwindigkeit der ausgelösten Bewegung der Antriebseinheit.

Mindestens sollten zwischen der Grundstellung und der Maximalstellung zwei, vorzugsweise regelmäßig beabstandete, Zwischenstellungen vorgesehen sein. Es können auch bspw. fünf oder acht konkrete, regelmäßig beabstandete Stufen ausgebildet sein. Bevorzugt ist jedoch vorgesehen, dass die Zwischenstellungen im Auslösebereich stufenlos sind. Bevorzugt ist das Bedienelement selbstrückstellend, d.h. beim Loslassen geht das Element selbsttätig in die Grundstellung zurück und die ausgelöste Bewegung einer Antriebseinheit wird gestoppt. Dem Bedienelement ist dabei eine beliebige Maschinen- oder Roboterverfahrbewegung (Achsbewegung) oder eine Reihenfolge von Bewegungen fix zugeordnet oder zuweisbar (z.B. Formschließ- und -öffnungsbewegung).

Weiters weist eine bevorzugte Bedieneinheit einen Bildschirm zur Anzeige maschinenspezifischer Parameter auf, wobei bevorzugt weiters vorgesehen ist, dass durch das Bedienelement auch die maschinenspezifischen Parameter einstellbar sind.

Um eine am Bedienelement durchgeführte Bedienbewegung in ein Signal zum Steuern bzw. Regeln der Bewegung der Antriebseinheit umzuwandeln, ist bevorzugt eine logisch zwischen Bedienelement und Antriebseinheit angeordnete Steuer- oder Regeleinheit vorgesehen.

Ein besonderer Vorteil der vorliegenden Erfindung liegt darin, dass durch das Bedienelement Bewegungen mehrerer Antriebseinheiten nacheinander auslösbar sind. Um dabei Überschneidungen oder Fehlbedienungen zu vermeiden, ist bevorzugt vorgesehen, dass durch das Bedienelement zu einem Zeitpunkt immer nur eine Bewegung einer der Antriebseinheiten auslösbar ist.

Weiters ist bevorzugt vorgesehen, dass in der Steuer- oder Regeleinheit zumindest ein Geschwindigkeitsprofil für die Bewegung einer Antriebseinheit hinterlegt ist, wobei das Geschwindigkeitsprofil der Bewegung der Antriebseinheit bei Maximalstellung des Bedienelements entspricht. Für eine individuelle und vom Bediener leicht einzuschätzende bzw. abzulesende Einflussnahme auf die Geschwindigkeit ist bevorzugt vorgesehen, dass in Abhängigkeit der Zwischenstellung des Bedienelements zwischen Grundstellung und Maximalstellung die ausgelöste Bewegung der Antriebseinheit eine der Zwischenstellung entsprechende, prozentuell verringerte Geschwindigkeit des Geschwindigkeitsprofils aufweist. Somit bestimmt die Position des Bedienelements die Verfahrgeschwindigkeit der Antriebseinheit bzw. Achse. Je größer der Abstand zur Grundstellung ist, umso schneller ist die ausgelöste Bewegung.

Gemäß einer ersten Variante der vorliegenden Erfindung kann vorgesehen sein, dass das Bedienelement als, vorzugsweise drehbarer, mechanischer Knopf oder Schalter ausgebildet ist. Um dabei eine möglichst ergonomische Ausführung zu garantieren, kann das Bedienelement als Handrad, Hebel, Slider, Joystick o.ä. ausgebildet sein. Eine Alternative zu dieser mechanischen Ausbildung des Bedienelements kann vorsehen, dass das Bedienelement auf einem berührungsempfindlichen Bildschirm dargestellt ist. D.h. das Bedienelement ist rein als programmierbare und bewegbare Taste auf dem Bildschirm der Bedieneinheit dargestellt. Gemäß einer weiteren Alternative bzw. als Mischform kann vorgesehen sein, dass das Bedienelement als vom Hauptbildschirm separates Touchpad ausgebildet ist.

Das Bedienelement kann zusätzlich mit einer oder mehreren Drucktasten oder mit einer oder mehreren elektrischen Schaltkontakten ausgebildet sein. Dadurch lassen sich folgende Funktionen realisieren:
- Wechsel der Funktion:
   Durch Drücken auf das Bedienelement erfolgt ein erfindungsgemäßer Wechsel der durch das Bedienelement angesteuerten Antriebseinheit. So wechselt die hinterlegte Funktion von "Form schließen/Form öffnen" auf die Funktion "Düse vor/zurück". Durch intelligente Reihung der Bewegungen (Bewegungsabläufe) kann mittels dieses Bedienelements der gesamte Produktionszyklus auch im Handbetrieb sehr schnell und einfach durchfahren werden. So ist bevorzugt vorgesehen, dass der Wechsel abhängig von einstellbaren oder von in der Steuer- oder Regeleinheit hinterlegten Ablaufsequenzen ist.
- Automatikbetrieb:
   Im Automatikbetrieb weist das Bedienelement eine Starttastenfunktion auf. D.h., wenn die Maschine von Hand in den Automatikbetrieb gesetzt wurde, wird das Bedienelement zur Starttaste, was eine Platzersparnis gegenüber bisherigen Bedieneinheiten bringt.
- Programmunterbrechung:
   Das Bedienelement kann auch dafür verwendet werden, um nach erfolgtem Zyklusstart in eine Automatik zu schalten. Der laufende Zyklus wird durch Betätigen des Bedienelements dabei unterbrochen.

Eine weitere bevorzugte Ausführungsform der vorliegenden Erfindung kann vorsehen, dass das Bedienelement von der Grundstellung in zwei Richtungen jeweils in Auslösebereiche bewegbar ist, wobei von der gewählten Richtung des Auslösebereichs im Bezug auf die Grundstellung die Bewegungsrichtung der ausgelösten Bewegung der Antriebseinheit abhängig ist So bewirkt z.B. eine Bewegung des Bedienelementes nach rechts das Formschließen, während eine Bewegung nach links die Formöffnungsbewegung einleitet. Es kann bei einem drehbaren Bedienelement dabei ein Begrenzungsanschlag (Maximalstellung) bei +/- 75 Grad von der Grundstellung vorhanden sein.

Schutz wird auch begehrt für eine Spritzgießmaschine mit zumindest einer Antriebseinheit zum Bewegen eines Teils der Spritzgießmaschine und einer erfindungsgemäßen Bedieneinheit. Als Antriebseinheit kann dazu bspw. ein Kniehebelmechanismus, ein Kernzug, ein Auswerfer, eine Dosiervorrichtung, ein Drehtisch u.v.m, angesehen werden. Die erfindungsgemäße Bedieneinheit kann nicht nur für eine Spritzgießmaschine selbst, sondern auch für einen Handlingroboter, ein Temperiergerät, ein Förderband oder Ähnliches, die Teil einer Spritzgießanlage sind, eingesetzt werden, wobei durch die Bedieneinheit beispielsweise die Bewegung einer Roboterachse (entspricht der Antriebseinheit) aulösbar ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch eine Spritzgießmaschine mitsamt Bedieneinheit,
- Fig. 2: ein drehbares Bedienelement,
- Fig. 3: ein verschiebbares Bedienelement mit Auslösebereichen und
- Fig. 4: ein Diagramm eines Geschwindigkeitsprofils.

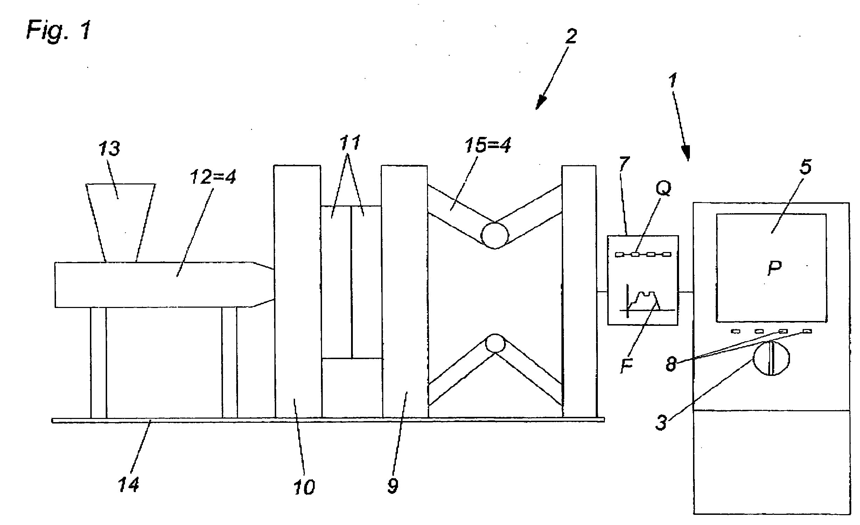

In Figur 1 ist im linken Bereich eine Spritzgießmaschine 2 dargestellt. Dabei ist auf dem Rahmen 14 die bewegbare Formaufspannplatte 9 verschiebbar angeordnet.

Diese Formaufspannplatte 9 ist von einem (schematisch angedeuteten Kniehebelmechanismus 15 - der eine Antriebseinheit 4 bildet - bewegbar, wodurch die Werkzeughälften des Werkzeugs 11 zwischen der bewegbaren Formaufspannplatte 9 und der feststehenden Formaufspannplatte 10 aufeinanderpressbar sind. In die im Werkzeug 11 ausgebildete Kavität ist über das Spritzaggregat 12 eine Kunststoffgrundkomponente einbringbar. Bspw. kann über einen Einfülltrichter 13 Kohlenstoffgranulat in das Spritzaggregat 12 eingebracht werden und darin von einer Schnecke (bildet eine weitere Antriebseinheit 4) aufgeschmolzen und in weiterer Folge eingespritzt werden.

Die Bewegungen der einzelnen Antriebseinheiten 4 der Spritzgießmaschine 2 werden über die Bedieneinheit 1 gesteuert bzw. geregelt. Die Bedieneinheit 1 weist einen vorzugsweise berührungsempfindlichen Bildschirm 5 auf, an dem unter anderem maschinenspezifische Parameter P darstellbar sind. Unterhalb des Bildschirms 5 sind mehrere Zusatzschalter 8, vorwiegend mit Sicherheitsfunktionen, angeordnet. Als für den normalen Betriebsmodus bzw. für die Produktion wichtigstes Bauteil ist an der Bedieneinheit 1 das Bedienelement 3 vorgesehen. Gemäß dieser Figur 1 ist das Bedienelement 3 in seiner Grundstellung G gezeigt, in welcher noch keine Bewegung einer Antriebseinheit 4 der Spritzgießmaschine 2 ausgelöst wird. Durch Bewegen des Bedienelements 3 nach links oder rechts wird eine Bewegung einer Antriebseinheit 4 der Spritzgießmaschine 2 ausgelöst. Dabei wird ein Signal an die Steuer- oder Regeleinheit 7 weitergeleitet, welches in Abhängigkeit der gerade aktuellen Ablaufsequenz Q bzw. des für die Antriebseinheit 4 hinterlegten Geschwindigkeitsprofils F ein Signal weiterleitet und eine Bewegung einer Antriebseinheit 4 auslöst. Durch Drücken auf das Bedienelement 3 bzw. durch Anwahl über eine Bildseite kann die gewünschte Bewegung bzw. Funktionalität (nächster - Schritt der Ablaufsequenz Q) gewählt werden und dem Bedienelement 3 zugewiesen werden. Am Bildschirm 5 bzw. an einem separaten Anzeigefeld ist diese Auswahl dargestellt.

Bevorzugt erfolgt ein solcher Wechsel der Funktion immer in derselben Reihenfolge gemäß einstellbarer bzw. auswählbarer Ablaufsequenz Q. Zunächst wird bspw. das Bedienelement 3 in Richtung "Schließsequenz" bewegt. Dadurch wird eine Bewegung entsprechend des eingestellten Ablaufs durchfahren. Ein Stepbetrieb durch zusätzliches Betätigen einer Zustimmtaste ist möglich. Danach erfolgt ein Drücken auf das Bedienelement 3. Dadurch wechselt die Funktion von "Schließsequenz/Öffnungssequenz" auf die Funktion "Düse vor/zurück". Anschließend wird das Bedienelement in Richtung "Düse vor" betätigt. Dadurch wird diese Bewegung ausgeführt. Wenn wieder auf das Bedienelement 3 gedrückt wird, erfolgt ein Wechsel von der Funktion "Düse vor/zurück" auf die Funktion "Einspritzen/Dosieren". Bei Betätigung des Bedienelementes 3 in Richtung "Einspritzen" wird das Einspritzen durchgeführt. Anschließend wird das Bedienelement in Richtung "Dosieren" bewegt, wodurch das Dosieren im Spritzaggregat 12 ausgelöst wird. Bei Drücken auf das Bedienelement 3 wechselt die Funktion von "Einspritzen/Dosieren" auf die Funktion "Schließsequenz/Öffnungssequenz". Bei Bewegen des Bedienelements in Richtung "Öffnungssequenz" wird die bewegbare Formaufspannplatte 9 in Öffnungsrichtung bewegt. Als nächstes könnte dann noch die Betätigung eines Auswerfers o.ä. erfolgen.

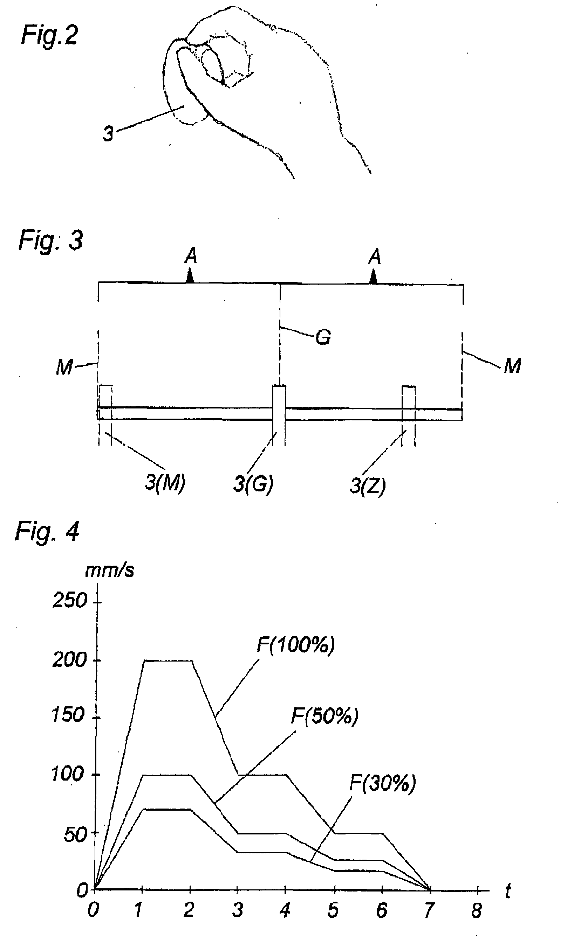

In Figur 2 ist eine perspektivische Darstellung eines mechanischen Bedienelements 2 gezeigt, der von der Hand eines Bedieners betätigbar ist.

In Figur 3 ist ein linear verschiebbares Bedienelement 3 dargestellt. Das Bedienelement 3 befindet sich dabei in der Grundstellung G. Bei Bewegung des Bedienelements 3 aus der Grundstellung G in einen der beiden Auslösebereiche A gelangt das Bedienelement 3 zunächst in eine Zwischenstellung Z (siehe rechtes, strichliert dargestelltes Bedienelement 3). Das Bedienelement 3 ist dabei bis zu einer Maximalstellung M bewegbar (siehe linkes, strichliert dargestelltes Bedienelement 3). Analog gelten diese Auslösebereiche A bzw. Stellungen G, Z und M bei einem drehbeweglichen Bedienelement 3.

In Figur 4 ist ein Diagramm dargestellt, wie es in einer Steuer- oder Regeleinheit 7 hinterlegt sein kann. Dabei ist das Geschwindigkeitsprofil F für die Bewegung einer Antriebseinheit 4 einer Spritzgießmaschine 2 gezeigt. Auf der vertikalen Achse ist die Verfahrgeschwindigkeit der Antriebseinheit 4 in mm/sec angegeben. Auf der horizontalen Achse sind die Zeitpunkte t in Sekundenschritten angegeben. Wenn sich das Bedienelement 3 in seiner Maximalstellung M befindet, wird die Geschwindigkeit der Antriebseinheit 4 gemäß dem Geschwindigkeitsprofil F (100%) abgefahren. Wenn sich das Bedienelement 3 auf halber Strecke zwischen der Grundstellung G und der Maximalstellung M befindet, wird die Bewegung der Antriebseinheit 4 mit halber Geschwindigkeit gemäß dem Geschwindigkeitsprofil F (50%) durchgeführt. Entsprechendes gilt für das Geschwindigkeitsprofil F (30%) und alle weiteren möglichen Zwischenstellungen Z.

Durch die hier vorliegende Erfindung sind somit zwei große Vorteile gegenüber den bisher bekannten Bedienphilosophien gegeben. So ist zum Einen die Verfahrgeschwindigkeit der betätigten Antriebseinheit 4 abhängig von der Position bzw. Stellung des Bedienelements 3. Die Einstellung für die Sallgeschwindigkeiten des Produktionszyklus müssen dabei nicht verändert werden, wenn im Handbetrieb langsamer verfahren werden soll/muss. Vielmehr ist die eingestellte Sollgeschwindigkeit im Handbetrieb die maximale Geschwindigkeit, die mit dem Bedienelement 3 gefahren werden kann. Zum Anderen ist die Bedienung der Maschine im Handbetrieb über eine einzige Taste möglich. Die Hand bleibt dabei immer auf dem Bedienelement 3, wobei das Auswählen der gewünschten Bewegung bzw. Bewegungsgruppe durch Drücken auf das Bedienelement 3 durchgeführt wird. Es ist somit kein Suchen der gewünschten Handtaste erforderlich. Für den Funktionswechsel können natürlich auch sämtliche andere Bewegungsarten außer dem Drücken (z.B. ziehen, schwenken, usw.) verwendet werden. Wichtig ist nur, dass mit dem Bedienelement zwei unterschiedliche Arten von Bedienbewegungen möglich sind. Zum Einen muss eine Bewegungsmöglichkeit eindeutig der Geschwindigkeitsregelung zugeordnet sein. Die andere Bewegungsmöglichkeit muss eindeutig einen Rückschluss auf einen Funktionswechsel zulassen.

## Patentansprüche

1. Bedieneinheit (1) für eine Spritzgießmaschine (2), mit einem Bedienelement (3) zum Auslösen zumindest einer Bewegung einer Antriebseinheit (4) der Spritzgießmaschine (2), wobei das Bedienelement (3) von einer Grundstellung (G) in einen die Bewegung der Antriebseinheit (4) auslösenden Auslösebereich (A) bewegbar ist, **dadurch gekennzeichnet, dass** der Auslösebereich (A) eine Vielzahl von Zwischenstellungen (Z) zwischen der Grundstellung (G) und einer Maximalstellung (M) aufweist, wobei die Geschwindigkeit der ausgelösten Bewegung der Antriebseinheit (4) abhängig von der Entfernung der gewählten Zwischenstellung (Z) des Bedienelements (3) von der Grundstellung (G) ist, und durch das Bedienelement (3) Bewegungen mehrerer Antriebseinheiten (4) auslösbar sind, wobei durch Drücken, Ziehen, Schwenken usw. des Bedienelements (3) ein Wechsel der durch das Bedienelement (3) angesteuerten Antriebseinheit (4) erfolgt.

2. Bedieneinheit nach Anspruch 1, **dadurch gekennzeichnet, dass** je größer die Entfernung der Zwischenstellung (Z) von der Grundstellung (G) ist, desto höher ist die Geschwindigkeit der ausgelösten Bewegung der Antriebseinheit (4).

3. Bedieneinheit nach Anspruch 1 oder 2, **dadurch gekennzeichnet, dass** die Zwischenstellungen (Z) im Auslösebereich (A) stufenlos sind.

4. Bedieneinheit nach einem der Ansprüche 1 bis 3, **gekennzeichnet durch** einen Bildschirm (5) zur Anzeige maschinenspezifischer Parameter (P).

5. Bedieneinheit nach Anspruch 4, **dadurch gekennzeichnet, dass** durch das Bedienelement (3) auch die maschinenspezifischen Parameter (P) einstellbar sind.

6. Bedieneinheit nach einem der Ansprüche 1 bis 5, **gekennzeichnet durch** eine logisch zwischen Bedienelement (3) und Antriebseinheit (4) angeordnete Steuer- oder Regeleinheit (7), **durch** die eine am Bedienelement (3) durchgeführte Bedienbewegung in ein Signal zum Steuern bzw. Regeln der Bewegung der Antriebseinheit (4) umwandelbar ist.

7. Bedieneinheit nach einem der Ansprüche 1 bis 6, **dadurch gekennzeichnet, dass** durch das Bedienelement (3) Bewegungen mehrerer Antriebseinheiten (4) nacheinander auslösbar sind.

8. Bedieneinheit nach Anspruch 7, **dadurch gekennzeichnet, dass** durch das Bedienelement (3) zu einem Zeitpunkt (t) immer nur eine Bewegung einer der Antriebseinheiten (4) auslösbar ist.

9. Bedieneinheit nach Anspruch 7 oder 8, **dadurch gekennzeichnet, dass** in der Steuer- oder Regeleinheit (7) zumindest ein Geschwindigkeitsprofil (F) für die Bewegung einer Antriebseinheit (4) hinterlegt ist, wobei das Geschwindigkeitsprofil (F) der Bewegung der Antriebseinheit (4) bei Maximalstellung (M) des Bedienelements (3) entspricht.

10. Bedieneinheit nach Anspruch 9, **dadurch gekennzeichnet, dass** in Abhängigkeit der Zwischenstellung (Z) des Bedienelements (3) zwischen Grundstellung (G) und Maximalstellung (M) die ausgelöste Bewegung der Antriebseinheit (4) eine der Zwischenstellung (Z) entsprechende, prozentuell verringerte Geschwindigkeit des Geschwindigkeitsprofils (F) aufweist.

11. Bedieneinheit nach einem der Ansprüche 1 bis 10, **dadurch gekennzeichnet, dass** das Bedienelement (3) als, vorzugsweise drehbarer, mechanischer Schalter bzw. Knopf ausgebildet ist.

12. Bedieneinheit nach einem der Ansprüche 1 bis 10, **dadurch gekennzeichnet, dass** das Bedienelement (3) auf einem berührungsempfindlichen Bildschirm (5) dargestellt ist.

13. Bedieneinheit nach einem der Ansprüche 1 bis 12, **dadurch gekennzeichnet, dass** der Wechsel abhängig von einstellbaren oder von in der Steuer- oder Regeleinheit (7) hinterlegten Ablaufsequenzen (Q) ist.

14. Bedieneinheit nach einem der Ansprüche 1 bis 13, **dadurch gekennzeichnet, dass** das Bedienelement (3) von der Grundstellung (G) in zwei Richtungen jeweils in Auslösebereiche (A) bewegbar ist, wobei von der gewählten Richtung des Auslösebereichs (A) im Bezug auf die Grundstellung (G) die Bewegungsrichtung der ausgelösten Bewegung der Antriebseinheit (4) abhängig ist.

15. Spritzgießmaschine (2) mit zumindest einer Antriebseinheit (4) zum Bewegen eines Teils der Spritzgießmaschine (2) und einer Bedieneinheit (1) nach einem der Ansprüche 1 bis 14.

16. Spritzgießanlage mit einer Bedieneinheit (1) nach einem der Ansprüche 1 bis 14, wobei durch Bedieneinheit (1) eine Spritzgießmaschine, ein Handlingroboter, eine Temperiergerät, ein Förderband oder Ähnliches der Spritzgießanlage steuer- bzw. regelbar ist.

## Claims

1. An operating unit (1) for an injection moulding machine (2) comprising an operating element (3) for triggering at least a movement of a drive unit (4) of the injection moulding machine (2) wherein the operating element (3) is moveable from a basic position (G) into a triggering region (A) for triggering the movement of the drive unit (4), **characterised in that** the triggering region (A) has a plurality of intermediate positions (Z) between the basic position (G) and a maximum position (M), wherein the speed of the triggered movement of the drive unit (4) is dependent on the distance of the selected intermediate position (Z) of the operating element (3) from the basic position (G) and movements of a plurality of drive units (4) can be triggered by the operating element (3), wherein a change in the drive unit (4) actuated by the operating element (3) is effected by pressing, pulling, pivoting and so forth the operating element (3).

2. An operating unit according to claim 1 **characterised in that** the greater the distance of the intermediate position (Z) from the basic position (G), the correspondingly higher is the speed of the triggered movement of the drive unit (4).

3. An operating unit according to claim 1 or claim 2 **characterised in that** the intermediate positions (Z) are stepless in the triggering region (A).

4. An operating unit according to one of claims 1 to 3 **characterised by** a screen (5) for the display of machine-specific parameters (P).

5. An operating unit according to claim 4 **characterised in that** the machine-specific parameters (P) can also be adjusted by the operating element (3).

6. An operating unit according to one of claims 1 to 5 **characterised by** an open-loop or closed-loop control unit (7) which is logically arranged between the operating element (3) and the drive unit (4) and by which an operating movement carried out at the operating element (3) can be converted into a signal for open-loop or closed-loop control of the movement of the drive unit (4).

7. An operating unit according to one of claims 1 to 6 **characterised in that** movements of a plurality of drive units (4) can be successively triggered by the operating element (3).

8. An operating unit according to claim 7 **characterised in that** only ever one movement of one of the drive units (4) can be triggered by the operating element (3) at a moment in time (t).

9. An operating unit according to claim 7 or claim 8 **characterised in that** at least one speed profile (F) for the movement of a drive unit (4) is stored in the open-loop or closed-loop control unit (7), wherein the speed profile (F) corresponds to the movement of the drive unit (4) at the maximum position (M) of the operating element (3).

10. An operating unit according to claim 9 **characterised in that** in dependence on the intermediate position (Z) of the operating element (3) between the basic position (G) and the maximum position (M) the triggered movement of the drive unit (4) has a percentagely reduced speed of the speed profile (F), that corresponds to the intermediate position (Z).

11. An operating unit according to one of claims 1 to 10 **characterised in that** the operating element (3) is in the form of a preferably rotatable mechanical switch or knob.

12. An operating unit according to one of claims 1 to 10 **characterised in that** the operating element (3) is represented on a touch-sensitive screen (5).

13. An operating unit according to one of claims 1 to 12 **characterised in that** the change is dependent on run sequences (Q) which are adjustable or which are stored in the open-loop or closed-loop control unit (7).

14. An operating unit according to one of claims 1 to 13 **characterised in that** the operating element (3) is moveable from the basic position (G) in two directions respectively into triggering regions (A), wherein the direction of movement of the triggered movement of the drive unit (4) is dependent on the selected direction of the triggering region (A) in relation to the basic position (G).

15. An injection moulding machine (2) comprising at least one drive unit (4) for moving a part of the injection moulding machine (2) and an operating unit (1) according to one of claims 1 to 14.

16. An injection moulding installation comprising an operating unit (1) according to one of claims 1 to 14 wherein an injection moulding machine, a handling robot, a temperature control device, a conveyor belt or the like of the injection moulding installation can be open-loop or closed-loop controlled by the operating unit (1).

## Revendications

1. Unité de commande (1) pour une machine de moulage par injection (2), avec un élément de commande (3) pour le déclenchement d'au moins un déplacement d'une unité d'entraînement (4) de la machine de moulage par injection (2), l'élément de commande (3) étant déplaçable d'une position initiale (G) vers une zone de déclenchement (A) provoquant le déplacement de l'unité d'entraînement (4), **caractérisée en ce que** la zone de déclenchement (A) présente une pluralité de positions intermédiaires (Z) entre la position initiale (G) et une position maximale (M), la vitesse du déplacement déclenché pour l'unité d'entraînement (4) étant fonction de l'éloignement de la position intermédiaire (Z) sélectionnée pour l'élément de commande (3) par rapport à la position initiale (G), et les déplacements de plusieurs unités d'entraînement (4) étant déclenchables par l'élément de commande (3), un changement des unités d'entraînement (4) commandées par l'élément de commande (3) étant obtenu par poussée, traction, pivotement, etc., de l'élément de commande (3).

2. Unité de commande selon la revendication 1, **caractérisée en ce que** la vitesse du déplacement déclenché pour l'unité d'entraînement (4) est d'autant plus élevée que l'éloignement de la position intermédiaire (Z) par rapport à la position initiale (G) est important.

3. Unité de commande selon la revendication 1 ou 2, **caractérisée en ce que** les positions intermédiaires (Z) sont progressives dans la zone de déclenchement (A).

4. Unité de commande selon l'une des revendications 1 à 3, **caractérisée par** un écran (5) pour l'affichage de paramètres (P) spécifiques à la machine.

5. Unité de commande selon la revendication 4, **caractérisée en ce que** les paramètres (P) spécifiques à la machine sont également réglables par l'élément de commande (3).

6. Unité de commande selon l'une des revendications 1 à 5, **caractérisée par** une unité de commande ou de réglage (7) logique disposée entre l'élément de commande (3) et l'unité d'entraînement (4), au moyen de laquelle un mouvement de commande exécuté sur l'élément de commande (3) peut être converti en signal de commande ou de réglage du déplacement de l'unité d'entraînement (4).

7. Unité de commande selon l'une des revendications 1 à 6, **caractérisée en ce que** les déplacements de plusieurs unités d'entraînement (4) peuvent être déclenchés successivement par l'élément de commande (3).

8. Unité de commande selon la revendication 7, **caractérisée en ce qu'**un seul déplacement d'une des unités d'entraînement (4) peut toujours être déclenché par l'élément de commande (3) à un moment (t).

9. Unité de commande selon la revendication 7 ou 8, **caractérisée en ce qu'**au moins un profil de vitesse (F) pour le déplacement d'une unité d'entraînement (4) est mémorisé dans l'unité de commande ou de réglage (7), ledit profil de vitesse (F) correspondant au déplacement de l'unité d'entraînement (4) pour la position maximale (M) de l'élément de commande (3).

10. Unité de commande selon la revendication 9, **caractérisée en ce qu'**en fonction de la position intermédiaire (Z) de l'élément de commande (3) entre la position initiale (G) et la position maximale (M), le déplacement déclenché pour l'unité d'entraînement (4) présente une vitesse réduite en pourcentage du profil de vitesse (F) correspondant à la position intermédiaire (Z).

11. Unité de commande selon l'une des revendications 1 à 10, **caractérisée en ce que** l'élément de commande (3) est réalisé sous forme de commutateur mécanique ou de bouton préférentiellement rotatif.

12. Unité de commande selon l'une des revendications 1 à 10, **caractérisée en ce que** l'élément de commande (3) est représenté sur un écran (5) tactile.

13. Unité de commande selon l'une des revendications 1 à 12, **caractérisée en ce que** la commutation est fonction de séquences d'exécution (Q) réglables ou mémorisées dans l'unité de commande ou de réglage (7).

14. Unité de commande selon l'une des revendications 1 à 13, **caractérisée en ce que** l'élément de commande (3) est déplaçable dans deux directions de la position initiale (G) vers des zones de déclenchement (A) respectives, la direction du déplacement déclenché pour l'unité d'entraînement (4) étant fonction de la direction sélectionnée pour la zone de déclenchement (A) par rapport à la position initiale (G).

15. Machine de moulage par injection (2) avec au moins une unité d'entraînement (4) pour le déplacement d'une partie de la machine de moulage par injection (2) et une unité de commande (1) selon l'une des revendications 1 à 14.

16. Installation de moulage par injection avec une unité de commande (1) selon l'une des revendications 1 à 14, une machine de moulage par injection, un robot de manipulation, un régulateur de température, un convoyeur ou un équipement similaire de ladite installation de moulage par injection pouvant être commandés ou réglés par l'unité de commande (1).
